# EUROPEAN PATENT APPLICATION

(11) **EP 4 783 724 A1**
(43) Date of publication of application: **29.07.2026**
(21) Application number: 26153410.1
(22) Date of filing: 22.01.2026
(51) Int. Cl.: H04W 76/15, H04W 84/12, H04W 88/06

(54) **COMMUNICATION APPARATUS, METHOD, PROGRAM AND STORAGE MEDIUM**

(30) Priority: 23.01.2025 JP 2025009974
(71) Applicant: Canon Kabushiki Kaisha, Tokyo, 146-8501 (JP)
(72) Inventor: NAGAHARA, Ryuji, Ohta-ku, Tokyo, 146-8501 (JP)
(74) Representative: TBK

(57) **Abstract**

A communication apparatus (100) includes: receiving means that receives, while the communication apparatus is connected to a first access point, a user operation designating a second access point different from the first access point as a target for connection with the communication apparatus; connection control means that performs control to maintain a connection between the communication apparatus and the first access point and connect the communication apparatus to the second access point designated by the user operation designating the second access point received by the receiving means; and communication control means that performs control to perform data communication via both the first access point and the second access point in a state in which both the first access point and the second access point are connected to.

## Description

### TECHNICAL FIELD

The present disclosure relates to a communication apparatus that can execute wireless communication, a method executed in the communication apparatus, a program and a storage medium.

### BACKGROUND

In recent years, with increases in the amount of data communication, the development of wireless local area network (LAN) communication techniques has been proceeding. As the main wireless LAN communication standard, IEEE 802.11 standard series is known. The IEEE 802.11 standard series includes standards such as IEEE 802.11a/b/g/n/ac/ax/be, and the like. Japanese Patent Laid-Open No. 2018-50133 describes a communication apparatus that supports IEEE 802.11a/b/g/n/ac/ax. As described in Japanese Patent Laid-Open No. 2023-47136, in the IEEE 802.11be standard, a single access point (AP) establishes a plurality of links with a single station (STA) via a plurality of different frequency channels, and multi-link communication for communicating in parallel is standardized.

Studies have also been conducted relating to a multi-AP communication mechanism that transmits data to a STA in cooperation with a plurality of APs using the IEEE 802.11bn standard, which is a successor to the IEEE 802.11be standard. An example includes distributed MIMO technology based on multi-input multi-output (MIMO) technology in which a plurality of transmission and reception antennas are used at the same time and the same channel is used. With distributed MIMO, in an environment in which a plurality of APs and a plurality of STAs exist, a group is formed between APs, information relating to the communication state and the status of each AP is shared, and data is transmitted to an STA from the plurality of APs in parallel at the same time. By the plurality of APs performing joint transmission, the number of spatial streams can be increased compared to a case of a single AP. Thus, throughput can be expected to be enhanced. Another example includes a technology for enhancing the reception quality at a STA via temporal diversity and spatial diversity by the plurality of APs transmitting the data to the STA at different timings in a time-divisional manner.

This communication technology in which a plurality of APs form a group and cooperate is referred to as multi-AP communication. The APs are classified into a single coordinator AP that manages all of the APs, and coordinated APs that operate under the management of the coordinator AP.

### SUMMARY

In multi-AP, there is room for improvement in terms of favorable communication and usability. The present disclosure provides a mechanism for performing more favorable multi-AP communication.

The present disclosure in its first aspect provides a communication apparatus as specified in claim 1. Optional features are specified in claims 2 to 19.

The present disclosure in its second aspect provides a method as specified in claim 20.

The present disclosure in its third aspect provides a program as specified in claim 21.

The present disclosure in its fourth aspect provides a non-transitory computer-readable storage medium as specified in claim 22.

According to the present disclosure, multi-AP communication can be performed more favorably.

Features of the present disclosure will become apparent from the following description of embodiments with reference to the attached drawings. The following description of embodiments is described by way of example.

### BRIEF DESCRIPTION OF THE DRAWINGS

FIG. 1 is a diagram illustrating a configuration of a wireless communication system.
FIGS. 2A and 2B are diagrams illustrating a configuration of a communication apparatus.
FIGS. 3A to 3D are diagrams illustrating user interface screens.
FIGS. 4A and 4B are diagrams illustrating a configuration of a mobile terminal apparatus.
FIG. 5 is a diagram illustrating a configuration of an access point.
FIG. 6 is a diagram of a sequence between a STA and an AP relating to multi-AP communication.
FIGS. 7A to 7I are diagrams illustrating user interface screens.
FIG. 8 is a diagram illustrating a user interface screen.
FIGS. 9A to 9D are diagrams illustrating user interface screens.
FIGS. 10A and 10B are flowcharts illustrating the processing in the communication apparatus.
FIGS. 11A and 11B are flowcharts illustrating the processing in the communication apparatus.
FIG. 12 is a diagram illustrating a user interface screen.

### DESCRIPTION OF THE EMBODIMENTS

Hereinafter, embodiments will be described in detail with reference to the attached drawings. Note, the following embodiments are not intended to limit the scope of the disclosure. Multiple features are described in the embodiments, but limitation is not made to the disclosure that requires all such features, and multiple such features may be combined as appropriate. Furthermore, in the attached drawings, the same reference numerals are given to the same or similar configurations, and redundant description thereof is omitted.

### System Configuration

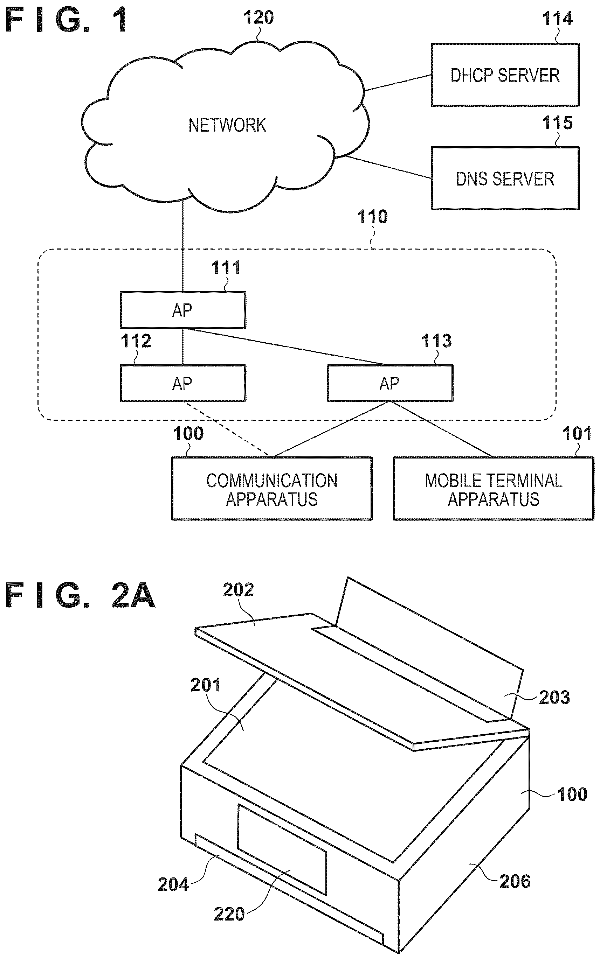

FIG. 1 is a diagram illustrating an example configuration of a system according to the present embodiment. The present system, in this example, is a wireless communication system enabling wireless communication between a plurality of communication apparatuses. The system of FIG. 1 includes a MFP 100 which is a communication apparatus, a mobile terminal apparatus 101, a multi-AP group 110 including a plurality of access points (AP), a DHCP server 114, a DNS server 115, and a network 120. Herein, the multi-AP group 110 is described as including AP 111, AP 112, and AP 113. However, the multi-AP group 110 may include a greater number of APs.

The mobile terminal apparatus 101 is an apparatus with a wireless communication function such as wireless LAN. Note that hereinafter, wireless LAN may be referred to as WLAN. The mobile terminal apparatus 101 may be a personal digital assistant (PDA) or similar personal information terminal, a mobile phone terminal (smartphone), a tablet terminal, a digital camera, a personal computer, or the like.

The MFP 100 is a printing apparatus with a print function and may also have a read function (scanner), a fax function, and a telephone function. Also, the MFP 100 according to the present embodiment has a communication function enabling wireless communication with the mobile terminal apparatus 101. Also, in the present embodiment described herein, the MFP 100 is used as an example, but no such limitation is intended. For example, instead of the MFP 100, a scanner apparatus, a projector, a mobile terminal, a smartphone, a notebook PC, a tablet terminal, a PDA, a digital camera, a music playback device, a television, a smart speaker, or the like with a communication function may be used. Note that MFP is an acronym for multifunction peripheral.

The AP 111 operates as a WLAN base station apparatus provided separate to (outside of) the mobile terminal apparatus 101 and the MFP 100. A communication apparatus with a WLAN communication function can communicate in WLAN infrastructure mode via the AP 111. Also, infrastructure mode may be referred to as wireless infrastructure mode. The AP 111 wirelessly communicates with a communication apparatus permitted (authenticated) to connect to it, and the communication apparatus relays wireless communication to other communication apparatuses. Also, the AP 111 may be connected to a wired communication network, for example, and relay communication between a communication apparatus connected to this wired communication network and other communication apparatuses wirelessly connected to the AP 111.

The AP 112 and the AP 113 have a similar hardware configuration to the AP 111. Also, the AP 111, the AP 112, and the AP 113 are APs that support multi-AP communication described below and cooperate to form a group (multi-AP group 110).

The DHCP server 114 is connected to the MFP 100 via the AP 111 and the network 120 and provides a service to the MFP 100 by responding to a request from the MFP 100. Note that the DHCP server 114 in FIG. 1 is illustrated as being connected to the AP 111, the AP 112, and the AP 113 as a separate device. However, the AP 111, the AP 112, and the AP 113 may have a DHCP server function.

The DNS server 115 is connected to the MFP 100 and the mobile terminal apparatus 101 via the AP 111 and the network 120 and provides a service for name resolution by responding to a request from the MFP 100 or the mobile terminal apparatus 101. Here, the network 120 may be the Internet, but a closed internal company network or a cellular network may be used.

### MFP External Appearance

FIG. 2A illustrates an example of the external appearance of the MFP 100. The MFP 100 includes, for example, a platen 201, a document cover 202, a printing paper insertion opening 203, a printing paper discharge opening 204, and an operation display unit 220. The platen 201 is a platform for placing documents to be read. The document cover 202 is a cover used to press against a document placed on the platen 201 or prevent light from a light source illuminating the document escaping out during reading (scanning). The printing paper insertion opening 203 is an insertion opening where various sizes of sheets can be set. The printing paper discharge opening 204 is a discharge opening where sheets are discharged after printing. The sheets set in the printing paper insertion opening 203 are conveyed one sheet at a time to a printing unit and are discharged from the printing paper discharge opening 204 after printing has been performed by the printing unit. The operation display unit 220 includes a touch panel display and is configured to receive operations from the user relating to the activation of various types of functions of an MFP and various types of settings. The operation display unit 220 may include character input keys, a cursor key, an enter key, a cancel key, and/or similar physical keys; LEDs; an LCD; and the like.

The MFP 100 has a WLAN wireless communication function and includes a wireless communication antenna 206 for wireless communication that is not necessarily visible from the outside. The MFP 100 can perform wireless communication via WLAN in a similar manner to the mobile terminal apparatus 101.

### MFP Configuration

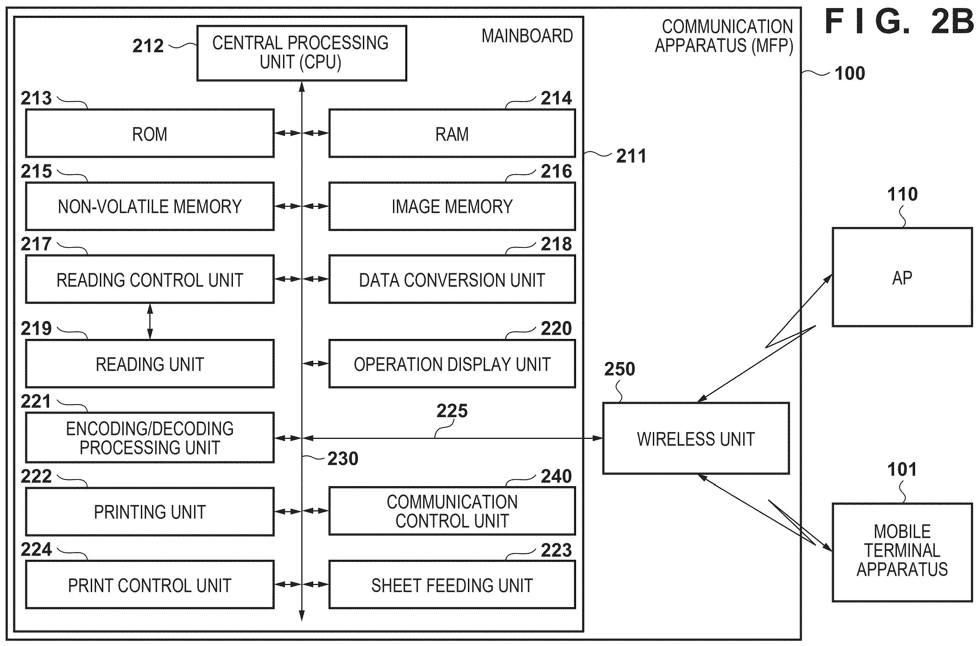

FIG. 2B illustrates an example of the configuration of the MFP 100. The MFP 100 includes a mainboard 211 for performing main control of the apparatus itself and a wireless unit 250, which is a single communication module for performing WLAN communication using at least one antenna. Also, the MFP 100 may include a wired LAN unit for performing wired LAN communication, for example.

The mainboard 211 includes, for example, a central processing unit (CPU) 212, a ROM 213, a RAM 214, a non-volatile memory 215, an image memory 216, a reading control unit 217, a data conversion unit 218, a reading unit 219, and an encoding/decoding processing unit 221. Also, the mainboard 211 includes, for example, a printing unit 222, a sheet feeding unit 223, a print control unit 224, and the operation display unit 220. These functional units in the mainboard 211 are connected to one another via a system bus 230 managed by the CPU 212. Also, the mainboard 211 and the wireless unit 250 are connected via a dedicated bus 225, for example.

The CPU 212 is a system control unit including at least one processor that controls the entire MFP 100. The processing of the MFP 100 described below is, for example, implemented by the CPU 212 executing programs stored in the ROM 213. Note that dedicated hardware may be prepared for each item of processing. The ROM 213 is a non-volatile memory that stores control programs executed by the CPU 212, embedded OS programs, and the like. In the present embodiment, the CPU 212 loads the control programs stored in the ROM 213 on the RAM 214 and executes the control programs under the management of the embedded OS stored in the ROM 213 to perform software control such as scheduling and task switching.

The RAM 214 is volatile memory constituted by an SRAM or the like. The RAM 214 stores data such as program control variables and the like, setting values registered by the user, MFP 100 management data, and the like. Also, the RAM 214 may be used as a buffer for various types of work. The non-volatile memory 215 is constituted by memory such as flash memory, for example, and continues to store data even after power to the MFP 100 is turned off. The image memory 216 is constituted by a memory such as a DRAM. The image memory 216 stores image data received via the wireless unit 250, image data processed by the encoding/decoding processing unit 221, and the like. Note that the memory configuration of the MFP 100 is not limited to the configuration described above. The data conversion unit 218 analyzes data of various formats, converts image data into print data, and the like.

The reading control unit 217 controls the reading unit 219 (for example, a contact image sensor (CIS)) to optically read (scan) the document placed on the platen 201. The reading control unit 217 converts the image obtained by optically reading the document into electrical image data (an image signal) for output. The reading control unit 217 may perform various types of processing such as binarization processing and halftone processing at this time and then output the image data.

The operation display unit 220 includes a touch panel display that displays images on the basis of display control by the CPU 212 and executes generation or the like of a signal in accordance with the reception of a user operation on the touch panel display or a physical operation key.

The encoding/decoding processing unit 221 performs encoding processing and decoding processing and enlargement and reduction processing of image data (JPEG, PNG, and the like) handled by the MFP 100.

The sheet feeding unit 223 holds sheets for printing. The sheet feeding unit 223 can supply sheets that have been set under the control of the print control unit 224. The sheet feeding unit 223 may include a plurality of sheet feeding units for holding a plurality of types of sheets in one apparatus and can control which sheet feeding unit to feed from under the control of the print control unit 224.

The print control unit 224 executes various types of processing such as smoothing processing, print density correction processing, and color correction on the image data to be printed and outputs post-processing image data to the printing unit 222. The printing unit 222 is configured to execute an inkjet printing process by discharging ink supplied from ink tanks from a print head and printing an image on a printing medium such as a sheet. Note that the printing unit 222 may be configured to execute an electro-photographic or other printing process. Also, the print control unit 224 may periodically read out information of the printing unit 222 and update status information such as ink tank remaining amount, print head state, and the like stored in the RAM 214.

The wireless unit 250 is a unit that can provide a WLAN communication function and, for example, can provide a function similar to a wireless unit 401 of the mobile terminal apparatus 101. In other words, the wireless unit 250, following a WLAN standard, converts data into packets and transmits packets to other devices or restores packets from other external devices into the original data and outputs them to the CPU 212.

The wireless unit 250 can communicate as a station (hereinafter referred to as STA) compliant with the IEEE 802.11 standard series or an access point (AP). Specifically, the wireless unit 250 can communicate in compliance with the IEEE 802.11a/b/g/n/ac/ax/be/bn standards. The wireless unit 250 internally includes at least one processor and at least one memory storing a program.

A communication control unit 240 is a unit that controls the communication function of the MFP 100 and that controls the wireless unit 250. The processing of the communication control unit 240 is implemented by the CPU 212 executing a control program stored in the ROM 213. The communication control unit 240 and the wireless unit 250 are connected to one another via the system bus 230 and the dedicated bus 225, for example.

### MFP Operation Display Unit

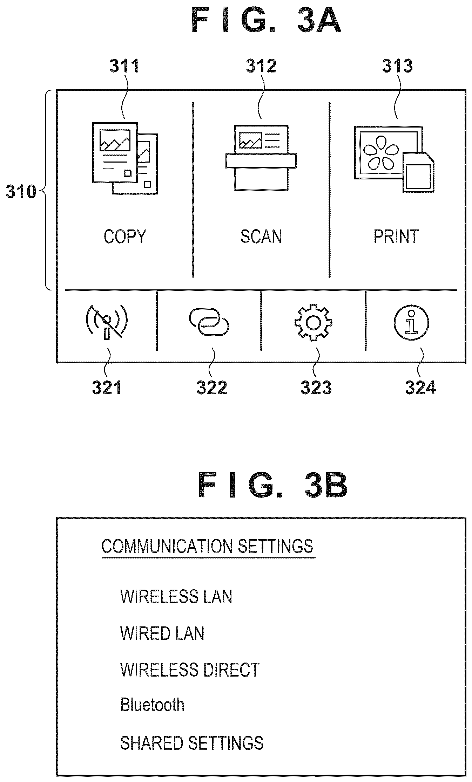

FIGS. 3A to 3D schematically illustrate examples of a screen display on a display (touch panel display) included in the operation display unit 220 of the MFP 100.

FIG. 3A is an example of a home screen displayed when the power of the MFP 100 is turned on and no operations such as printing or scanning are being performed (idle state, standby state). A region 310 in the upper portion of the home screen is a basic menu region where menu items are displayed for selection when issuing an instruction for copying or scanning. In FIG. 3A, icons 311 to 313 corresponding to copy, scan, and print are displayed as a list in the region 310 as menu items (display items) of the basic menu. When each menu item of the basic menu is selected, a corresponding detailed menu is displayed, and the MFP 100 can be caused to execute an operation or function (copy or scan) corresponding to the selected menu item. Menu items different from the icons 311 to 313 can be displayed via an operation (a left or right slide operation to the region 310 or the like) to display another page of the basic menu in the region 310. For example, an icon corresponding to cloud can be displayed. Cloud is a menu item relating to a cloud function using Internet communication.

A network display region 321 is a region for displaying an icon indicating the status of the network. In the illustrated example, in the network display region 321, an icon is displayed that indicates that both wireless infrastructure and wireless direct are disabled. Also, by touching the network display region 321, a communication settings menu can be displayed.

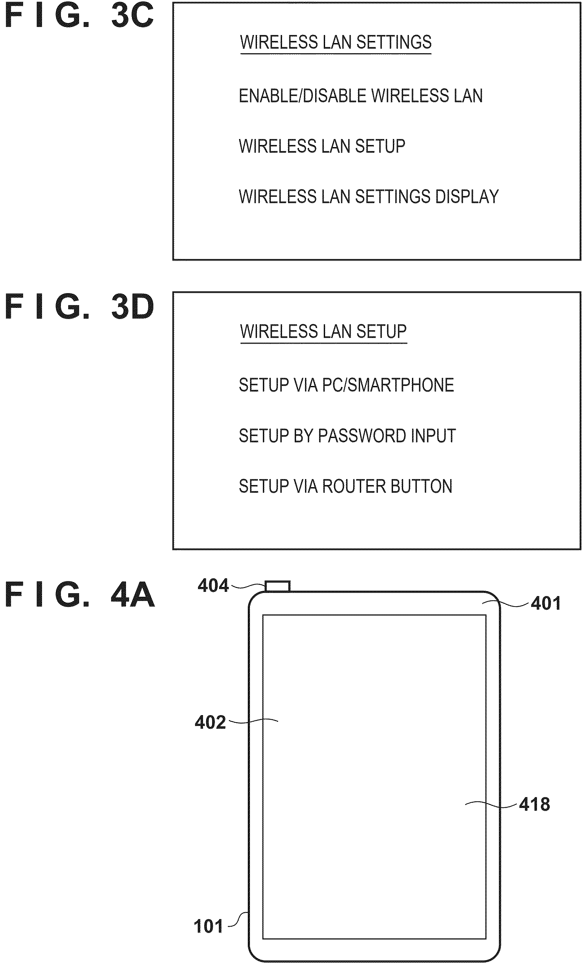

An icon 322 is an operation icon for receiving an instruction to perform setup using a PC or smartphone. When the icon 322 is touched, an operation that is the same as when "Setup via PC/Smartphone" of FIG. 3D described below is selected is performed.

An icon 323 is an operation icon selected when changing or editing the settings of the MFP 100.

FIG. 3B is a display example of a menu screen for communication settings displayed when the network display region 321 on the home screen of FIG. 3A is touched. On the menu screen for communication settings, "Wireless LAN", "Wired LAN", "Wireless Direct", "Bluetooth", and "Shared Settings" are displayed as menu items (options). "Wireless LAN", "Wired LAN", and "Wireless Direct" are menu items for LAN settings, and from these items, wired connection settings, wireless infrastructure mode enabled/disabled setting, WFD, softAP mode, or similar P2P mode enabled/disabled setting, and the like can be set.

FIG. 3C is a display example of a wireless LAN settings menu screen displayed when the "Wireless LAN" item on the screen of FIG. 3B is selected. On the wireless LAN settings menu screen, "Enable/Disable Wireless LAN", "Wireless LAN Setup", and "Wireless LAN Settings Display" are displayed as menu items (options). When the "Enable/Disable Wireless LAN" item is selected, the enable/disable wireless infrastructure mode setting is switched. When the "Wireless LAN Setup" item is selected, the wireless LAN setup menu of FIG. 3D is displayed. When "Wireless LAN Settings Display" is selected, a detailed screen (wireless LAN settings display screen) displaying details such as the current wireless LAN settings, communication status, and the like is displayed.

FIG. 3D is a display example of a wireless LAN setup menu screen displayed when the "Wireless LAN Setup" item on the screen of FIG. 3C is selected. On the wireless LAN setup menu screen, "Setup via PC/Smartphone", "Setup by Password Input", and Setup via Router Button" are displayed as menu items (options). From these items, wireless LAN setup described below including setup using a network setup mode, setup via a password input method, and setup via a push button method can be performed.

### Mobile Terminal Apparatus External Appearance

FIG. 4A is a diagram illustrating an example of the external appearance configuration of the mobile terminal apparatus 101. In the present embodiment, in this example, the mobile terminal apparatus 101 is a typical type of smartphone. Note that the mobile terminal apparatus 101, for example, includes a display unit 420, an operation unit 418, and a power key 404. The display unit 420 is a display including an organic electro luminescence (EL) display mechanism or a liquid crystal display (LCD) display mechanism, for example. Note that the display unit 420 may display information using a light-emitting diode (LED), for example. Also, the mobile terminal apparatus 101 may have a function of outputting information via audio in addition to or instead of the display unit 420. The operation unit 418 includes physical keys such as keys and buttons, a touch panel, and the like for detecting a user operation. Note that in the present example, since displaying information on the display unit 420 and receiving user operation via the operation unit 418 is performed using a common touch panel display, the display unit 420 and the operation unit 418 are implemented using a single apparatus. In this case, for example, button icons and a software keyboard are displayed using a display function via the display unit 420, and the user touching these sections is detected by an operation reception function via the operation unit 418. Note that the display unit 420 and the operation unit 418 may be separate, and a piece of hardware for display and a piece of hardware for operation reception may be individually prepared. The power key 404 is a physical key for receiving a user operation for turning the power of the mobile terminal apparatus 101 on or off.

The mobile terminal apparatus 101 includes the wireless unit 401 that provides a WLAN communication function and is not necessarily visible from the outside. The wireless unit 401 is configured to execute data (packet) communication in a WLAN system compliant with the IEEE 802.11 standard series (IEEE 802.11a/b/g/n/ac/ax/be/bn), for example. However, no such limitation is intended, and the wireless unit 401 may be configured to execute WLAN communication compliant with another standard. Note that in this example, the wireless unit 401 can communicate on both the 2.4 GHz frequency band and the 5 GHz frequency band. However, no such limitation is intended, and the wireless unit 401 may be able to communicate on one or more frequency bands including the 2.4 GHz frequency band, the 5 GHz frequency band, and the 6 GHz frequency band. Also, the wireless unit 401 can execute communication based on WFD, communication using a SoftAP mode, communication using a wireless infrastructure mode, and the like. Operations in these modes will be described below.

### Mobile Terminal Apparatus Configuration

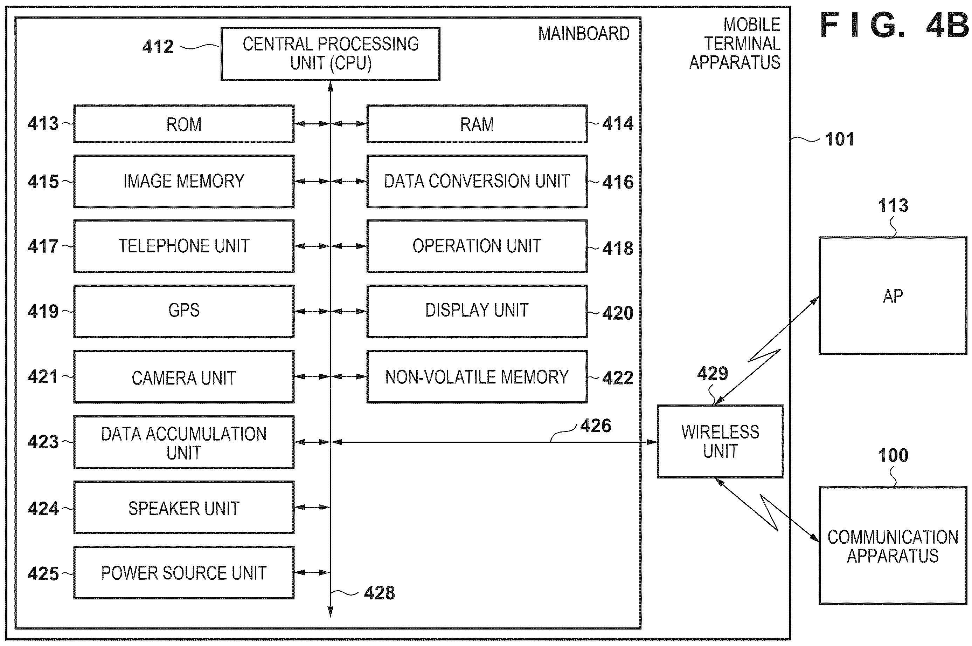

FIG. 4B illustrates an example of the configuration of the mobile terminal apparatus 101. The mobile terminal apparatus 101 in this example includes a mainboard 411 for executing main control of the apparatus itself and a wireless unit 429 for WLAN communication. The mainboard 411 includes, for example, a CPU 412, a ROM 413, a RAM 414, an image memory 415, a data conversion unit 416, a telephone unit 417, a GPS 419, a camera unit 421, a non-volatile memory 422, a data accumulation unit 423, a speaker unit 424, and a power source unit 425. Here, CPU is an acronym for central processing unit, ROM is an acronym for read only memory, RAM is an acronym for random access memory, and GPS is an acronym for global positioning system. The mobile terminal apparatus 101 also includes the display unit 420 and the operation unit 418. The functional units in the mainboard 411 are connected to one another via a system bus 428 managed by the CPU 412. Also, the mainboard 411 and the wireless unit 429 (the wireless unit 401 described above) are connected via a dedicated bus 426, for example.

The CPU 412 is a system control unit including at least one processor that controls the entire mobile terminal apparatus 101. The processing of the mobile terminal apparatus 101 described below is, for example, implemented by the CPU 412 executing programs stored in the ROM 413. Note that dedicated hardware may be prepared for each item of processing. The ROM 413 stores a control program executed by the CPU 412, an embedded operating system (OS) program, and the like. In the present embodiment, in a similar manner, the CPU 412 executes the control programs stored in the ROM 413 under the management of the embedded OS stored in the ROM 413 to perform software control such as scheduling and task switching.

The RAM 414 is constituted by a Static RAM (SRAM) or the like. The RAM 414 stores data such as program control variables and the like, setting values registered by the user, mobile terminal apparatus 101 management data, and the like. Also, the RAM 414 may be used as a buffer for various types of work. The image memory 415 is constituted by a memory such as a Dynamic RAM (DRAM). The image memory 415 temporarily stores image data received via the wireless unit 429 and image data read out from the data accumulation unit 423 for processing by the CPU 412. The non-volatile memory 422 is constituted by memory such as flash memory, for example, and continues to store data even after power to the mobile terminal apparatus 101 is turned off. Note that the memory configuration of the mobile terminal apparatus 101 is not limited to the configuration described above. For example, the image memory 415 and the RAM 414 may be shared, and data backup and the like may be performed using the data accumulation unit 423. Also, in the present embodiment, DRAM was given as an example of the image memory 415. However, another storage medium such as a hard disk or a non-volatile memory may be used.

The data conversion unit 416 executes analysis of data of various formats and data conversion, such as color conversion and image conversion. The telephone unit 417 performs control of a telephone line and implements telephone communication by processing audio data input/output via the speaker unit 424. The GPS 419 receives radio waves sent from satellites and obtains position information, for example the current latitude and longitude of the mobile terminal apparatus 101.

The camera unit 421 has a function of electronically recording and encoding an image input via a lens. The image data obtained via image capture by the camera unit 421 is stored in the data accumulation unit 423. The speaker unit 424 performs control to implement a function of inputting or outputting audio for the telephone function, as well as an alarm notification and the like. The power source unit 425 is a portable battery that controls power supply to the apparatus, for example. Power source states include, for example, a battery dead state in which the battery has no remaining amount, a power-off state in which the power key 404 is not pressed, an active state in which the apparatus is normally active, and a power saving state in which the apparatus is active but is set in a power saving mode.

The display unit 420 displays various types of input operations, the operation situation of the MFP 100, status situations, and the like on the basis of control by the CPU 412. The operation unit 418 performs control including generating an electrical signal corresponding to a received user operation and outputting the electrical signal to the CPU 412.

The mobile terminal apparatus 101 can perform wireless communication using the wireless unit 429 and communicate data with another device such as the MFP 100. The wireless unit 429 converts the data into packets and transmits the packets to the other device. Also, the wireless unit 429 restores a packet from an external other device into the original data and outputs this to the CPU 412. The wireless unit 429 is a unit for implementing communication compliant with the WLAN standards. The wireless unit 429 can operate in at least two communication modes in parallel, the at least two communication modes including wireless infrastructure mode and P2P (WLAN) mode. Note that the frequency range used in these communication modes may be restricted by the functions and performance of the hardware.

### Access Point Configuration

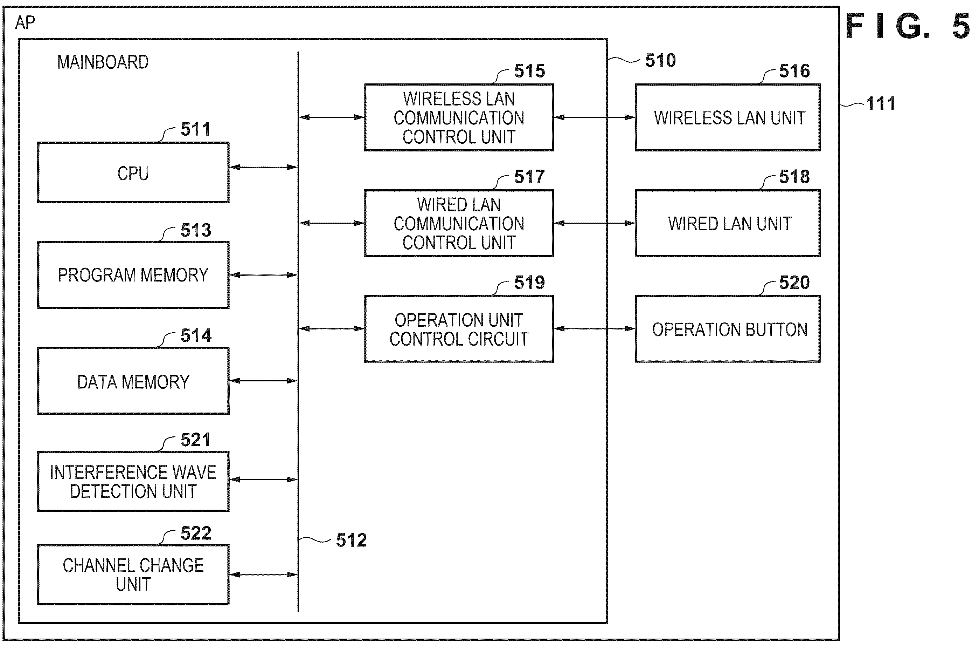

FIG. 5 is a block diagram illustrating the configuration of the AP 111 with a wireless LAN access point function. The AP 111 includes a mainboard 510 for performing control of a wireless LAN unit 516, a wired LAN unit 518, and an operation button 520.

A CPU 511 in the form of a microprocessor disposed on the mainboard 510 operates according to a control program stored in a program memory 513 in the form of ROM connected via an internal bus 512, the content of a data memory 514 in the form of RAM, and the like. The CPU 511 performs wireless LAN communication with other communication terminal apparatuses by controlling the wireless LAN unit 516 via a wireless LAN communication control unit 515. Specifically, the wireless LAN unit 516 is configured to execute data (packet) communication in a WLAN system compliant with the IEEE 802.11 standard series (IEEE 802.11a/b/g/n/ac/ax/be/bn), for example, as wireless LAN communication. Also, communication is possible as an AP supporting multi-AP communication described below. However, no such limitation is intended, and the wireless LAN unit 516 may be configured to execute WLAN communication compliant with another standard. Note that in this example, the wireless LAN unit 516 can communicate on a frequency band such as the 2.4 GHz frequency band, the 5 GHz frequency band, and the 6 GHz frequency band. However, no such limitation is intended, and the wireless LAN unit 516 may be able to communicate on one or more frequency bands including the 2.4 GHz frequency band, the 5 GHz frequency band, and the 6 GHz frequency band.

Also, the CPU 511 performs wired LAN communication with other communication apparatuses by controlling the wired LAN unit 518 via a wired LAN communication control unit 517. The CPU 511 can receive operations from the user via the operation button 520 by controlling an operation unit control circuit 519. The CPU 511 includes at least one processor.

Also, the AP 111 includes an interference wave detection unit 521 and a channel change unit 522. The interference wave detection unit 521 executes interference detection processing during wireless communication in a band where dynamic frequency selection (DFS) is performed. The channel change unit 522 executes processing to change the channel to use when an interference wave is detected, when an empty channel needs to be immediately changed to, and the like during wireless communication in a band where DFS is performed.

Note that the AP 112 and the AP 113 have a configuration similar to that of the AP 111.

### P2P Mode (Direct Mode)

Next, in WLAN communication, the P2P (WLAN) communication method for apparatuses to wirelessly communicate directly bypassing an external access point will be described. P2P (WLAN) communication can be implemented using a plurality of methods. For example, a communication apparatus can support a plurality of modes for P2P (WLAN) communication and can perform P2P (WLAN) communication selectively using one of the plurality of modes.

The following two modes are examples of P2P modes.
· SoftAP mode
· Wi-Fi Direct (WFD) mode

The communication apparatus that can execute P2P communication may be configured to support at least one of the plurality of modes. On the other hand, a communication apparatus that can perform P2P communication does not mean that all of the modes are supported, and the communication apparatus may be configured to only support a portion of the modes.

With a communication apparatus (for example, the mobile terminal apparatus 101) having a communication function using WFD, when a user operation is received via the operation unit, an application (dedicated in some cases) for implementing the communication function is invoked. Then, the communication apparatus displays a user interface (UI) screen provided by the application and prompts for a user operation. WFD communication may be performed on the basis of the user operation received in response to this.

### · SoftAP Mode

In softAP mode, the communication apparatus (for example, the mobile terminal apparatus 101) operates as a client that requests the various types of service. Another communication apparatus (for example, the MFP 100) operates as a soft AP that can execute a WLAN AP function set by the software. Note that it is sufficient that the commands and parameters transmitted and received when establishing a wireless connection between the client and the soft AP are as specified by Wi-Fi (registered trademark) standards, and thus description thereof will be omitted. Also, the MFP 100 that operates in the softAP mode determines the frequency band and the frequency channel as a master station. Thus, the MFP 100 can select which frequency range to use from among the 5 GHz frequency band and the 2.4 GHz frequency band and which frequency channel to use in the frequency band.

### · WFD Mode

The MFP 100 may be configured to constantly active as a WFD mode master station (autonomous group owner). This makes GO Negotiation processing for determining roles unnecessary. Also, in this case, the MFP 100 determines the frequency band and the frequency channel as a master station. Thus, the MFP 100 can select which frequency range to use from among the 5 GHz frequency band and the 2.4 GHz frequency band and which frequency channel to use in the frequency band.

### Wireless Infrastructure Mode

In the wireless infrastructure mode, the communication apparatuses (for example, the mobile terminal apparatus 101 and the MFP 100) that communicate with one another are connected to an external AP (for example, the AP 111) controlling the network, and communication between the communication apparatuses is performed via the AP. In other words, communication between the communication apparatuses is performed via the network formed by the external AP. The mobile terminal apparatus 101 and the MFP 100 each discover the AP 111, transmit a connection request to the AP 111, and connect to the AP 111. This enables communication between the communication apparatuses in the wireless infrastructure mode via the AP 111. Note that the plurality of communication apparatuses may connect to different APs. In this case, the communication apparatuses can communicate by data being transferred between APs. Note that it is sufficient that the commands and parameters transmitted and received when the communication apparatuses communicate via the access point are as specified by Wi-Fi standards, and thus description thereof will be omitted. Also, in this case, the AP 111 determines the frequency band and the frequency channel. Thus, the AP 111 can select which frequency range to use from among the 5 GHz frequency band, the 2.4 GHz frequency band, and the 6 GHz frequency band and which frequency channel to use in the frequency band.

### Multi-AP Communication

With the IEEE 802.11be standard, a single access point (AP) establishes a plurality of links with a single station (STA) via a plurality of different frequency channels and multi-link communication for communicating in parallel is standardized.

Also, with the IEEE 802.11bn standard, which is a successor standard of the IEEE 802.11be standard, studies have been conducted into enhancing usability using multi-AP communication.

An example includes distributed MIMO technology based on multi-input multi-output (MIMO) technology in which a plurality of transmission and reception antennas are used at the same time via the same channel. With distributed MIMO, in an environment in which a plurality of APs and a plurality of STAs exist, a group is formed between APs, information relating to the communication state and the status of each AP is shared, and data is transmitted to an STA from the plurality of APs in parallel at the same time. By the plurality of APs performing joint transmission, the number of spatial streams can be increased compared to a case of a single AP. Thus, throughput can be expected to be enhanced.

Another example includes a technology for enhancing the reception quality at a STA via temporal diversity and spatial diversity by the plurality of APs transmitting the data to the STA at different timing in a time-divisional manner.

This communication technology in which a plurality of APs form a group and cooperate is referred to as multi-AP communication. The APs are classified into a single coordinator AP that manages all of the APs and coordinated APs that operate under the management of the coordinator AP.

Hereinafter, in describing multi-AP communication, an AP that manages APs will be referred to as "coordinator AP" or "sharing AP". An AP operating under the management of the coordinator AP will be referred to as "coordinated AP" or "shared AP". Also, the coordinator AP and the coordinated AP can transmit and receive signals with one another. Each of the plurality of APs including the AP 111 to the AP 113 may be wirelessly connected and perform wireless LAN communication or may have a wired connection and perform wired LAN communication. Note that the AP 111 to the AP 113 can perform multi-AP communication compliant with the IEEE 802.11 series standards and support a configuration in which a plurality of APs cooperate and communicate with a shared single STA.

Examples of a multi-AP communication method include the Co-OFDMA method and the Joint-TX method. The coordinated-orthogonal frequency division multiple access (Co-OFDMA) method includes dividing the usable frequency resources between a plurality of basic service sets (BSS). For example, a frequency resource used by the AP 112 and the MFP 100 (STA) and a frequency resource used by the AP 113 and the MFP 100 (STA) are divided so that they do not overlap with one another. This can prevent interference between BSS communications. In a case where the STA has the capability to simultaneously transmit and receive using a plurality of frequency bands (a plurality of resource units on the same channel or across different channels, a plurality of channels, or a plurality from among the 2.4 GHz frequency band, the 5 GHz frequency band, and the 6 GHz frequency band), the plurality of APs can cooperate and exchange data with the same STA. Data corresponds to content data including image data, audio data, document data, print data, and the like. In this case, transmission of packet 1 of content A from the AP 112 to the MFP 100 (STA) and transmission of packet 2 of content A from the AP 113 to the MFP 100 (STA) can be performed in parallel.

In the joint-transmission (Joint-TX) method, the same signal can be exchanged between a plurality of APs and a single STA. At this time, control is performed so that a multiplex wave (overlapped radio waves, multiplexed radio waves, combined waves) combined to amplify the radio waves output from the plurality of APs is received by the STA. In this manner, control is performed so that a signal (amplified signal) that is stronger than a signal from just one AP is received by the STA. For example, between the AP 112 and the MFP 100 (STA) and between the AP 113 and the MFP 100 (STA), the same signal is multiplexed and exchanged so that it is amplified at the position of the MFP 100 (STA). For example, at the same timing, packet 1 of content A is transmitted from the AP 112 to the MFP 100 (STA) and packet 1 of content A is transmitted from the AP 113 to the MFP 100 (STA). At this time, the radio wave of content A is transmitted so that it is multiplexed at the position of the MFP 100 (STA). This can enhance the reliability (connectivity) of communication between the STA and the AP and enhance the speed of data exchange.

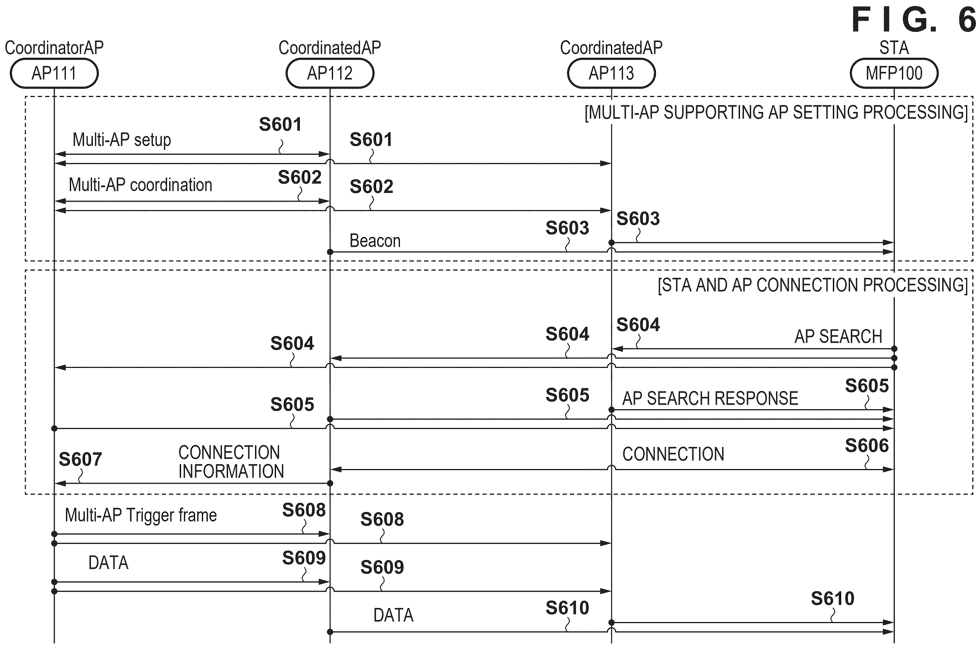

FIG. 6 is a sequence diagram illustrating an example of processing in which the AP 111 operates as the coordinator AP, the AP 112 and the AP 113 as coordinated APs cooperate, and data is exchanged with the MFP 100 (STA). The processing executed by each apparatus in the present sequence is implemented by the CPU of each apparatus reading out to the RAM and executing various types of programs stored in the ROM or similar memory of each apparatus.

In S601, the AP 111 to the AP 113 execute multi-AP setup processing. In multi-AP setup processing, the capability information and parameters are exchanged between the APs, and group formation is performed for multi-AP communication.

In S602, between the AP 111 to the AP 113, multi-AP coordination processing is executed. For example, the multi-AP communication method is determined, the roles of the APs (coordinator AP or coordinated AP) are determined, and parameters and network information are exchanged between APs. Determining the multi-AP communication method and determining the roles of the APs may be determined by exchanging and comparing parameters between the AP 111 to the AP 113. At this time, the coordinator AP (AP 111) communicates the network information (the SSID to be shared in use, the basic service set color ID (BSSID) to be shared in use, or the like) to the coordinated AP (AP 112 and AP 113). Note that the communication of the BSSID to be shared in use is performed in the case of the joint-TX method.

In S603, the AP 112 and the AP 113 transmit a beacon frame (information voluntarily and periodically transmitted by the AP) according to the network information communicated in S602. The beacon frame includes information indicating that multi-AP communication can be executed by the connected STA and information indicating the multi-AP communication method. A multi-AP information element (IE) may be provided for transmission in the beacon frame to be transmitted by the AP supporting multi-AP communication. The multi-AP IE includes at least one of the following information (one or more of the following information).

· SSID to be used by a plurality of coordinated APs belonging to the same multi-AP group (ESSID to be shared in use communicated in S602)
· BSSID (BSSID to be shared in use by the APs belonging to the multi-AP group 110 communicated in S602 in the case of the joint-TX method)
· BSS color value (identifier) for multi-AP communication
· Operation wireless channel (may include communication channel to be shared in use in the case of the joint-TX method, communication channel and/or resource unit used by the transmission source AP in the case of the Co-OFDMA method, and communication channel and/or resource unit used by other APs in the multi-AP group 110 in the case of the Co-OFDMA method)
· Multi-AP communication method (information specifying either the Co-OFDMA method or the joint-TX method)

Note that the information storage method and configuration are not limited to these examples, and similar information may be stored and transmitted using a similar format. Note that multi-AP IE may be alternatively referred to as multi-AP element or the like. Also, the multi-AP element may be included in a probe response of S605 or a different radio frame such as an action frame or the like.

In S604, the MFP 100 (STA) starts the establishment of a connection with the APs via a wireless infrastructure mode. The MFP 100 (STA) starts searching for APs by transmitting a probe request frame in order to determine whether there is an AP that supports multi-AP communication.

In S605, the MFP 100 (STA) searches for and finds an AP by receiving a probe response frame or a beacon frame transmitted from an AP, which is a response to an AP search.

In S606, the MFP 100 (STA) executes connection processing with at least one coordinated AP on the basis of the information included in the frame received in S605. Here, for example, the MFP 100 (STA) transmits a connection request to the AP 112 and executes a connection attempt (connection processing). The connection processing here includes authentication and association processing as specified in IEEE 802.11, for example. The MFP 100 (STA) may provide a multi-AP IE to an association request frame to be transmitted to indicate a request for multi-AP communication. The AP 112 that receives the association request frame transmits an association response frame as a response. In this manner, the MFP 100 (STA) and the AP 112 establish a wireless LAN connection.

In S607, in a case where the AP 112 has established a connection with the MFP 100 (STA), the AP 112 communicates to the Coordinator AP (AP 111) both information indicating a connected state with the MFP 100 (STA) and connection parameters relating to the connected MFP 100 (STA). The connection parameters relating to the connected MFP 100 (STA) include information (information required for PMK caching and roaming, authentication information, and the like) used at the time of connection processing between the AP 112 and the MFP 100 or generated at the time of connection processing, an STA identifier, and the like. Note that in a case where the AP 113 and the MFP 100 (STA) are connected, in a similar manner, the AP 113 communicates that a connected state has been established to the Coordinator AP (AP 111).

After S607, the connection parameters relating to the MFP 100 (STA) transmitted in S607 are transmitted from the AP 111 to the AP 113. The AP 113 may use the transmitted connection parameters relating to the MFP 100 (STA) to execute processing to establish a connection with the MFP 100. However, in the case of the joint-TX method, data can also be transmitted from an AP without an established connection. In other words, an AP without an established connection may be a multiplexed radio wave transmission source. Thus, the processing for establishing a connection between the AP 113 and the MFP 100 may not be executed.

In S608, the coordinator AP (AP 111) determines the transmission parameters (information required for determining the transmission timing and transmission output for each coordinated AP and each antenna and/or resource unit allocation information and the like) on the basis of the connection parameters (parameters received in S607) of the coordinated AP in a connected state with the MFP 100 (STA) and thereafter performs transmission data allocation. The information of the determined transmission parameters is communicated to each coordinated AP via a multi-AP trigger frame. The AP 112 and the AP 113 set their transmission parameters (transmission timing and output and resource units to use) on the basis of the communicated information. Note that the multi-AP trigger frame may be referred to by a different name. Also, the multi-AP trigger frame may be an extended trigger frame of the IEEE 802.11ax/be standard.

In S609, the coordinator AP (AP 111) transmits, to the coordinated APs, transmission target data (for example, image data, document data, print data, or similar content data) to be sent to the MFP 100 (STA).

In S610, when the coordinated APs (the APs 112 and 113) receive the transmission target data from the coordinator AP (AP 111), the coordinated APs cooperate relating to the transmission target data and transmit it to the MFP 100. Also, when the coordinated APs (the APs 112 and 113) receive data from the MFP 100 (STA), the coordinated APs transmit the received data to the coordinator AP (AP 111). Note that this order of data exchange is an example, and for example, reception of the data from the STA may be performed before transmission of the data to the STA.

Note that the coordinator AP may directly exchange signals with the STA. For example, the AP 111 may operate as a coordinator AP and a coordinated AP. In this case, for example, the AP 111, while exchanging radio frames with the STA, may issue an instruction to the AP 112 or the AP 113 to cause an exchange of radio frames between the AP 112 or the AP 113 and the STA. Note that in a case where the coordinator AP causes a radio frame to be transmitted from the coordinated AP, the coordinator AP may transmit the transmission target data to the coordinated AP. However, no such limitation is intended, and the coordinated AP may directly obtain the transmission target data from the Internet, for example. Also, the coordinator AP may receive, from the coordinated AP, the data received by the coordinated AP from the STA, but the coordinated AP may transfer the data received from the STA to the STA partner apparatus without transferring the data to the coordinator AP.

Note that all of the APs in the same network can operate as a coordinator AP, and one of the APs may be determined to operate as the coordinator AP via certain criteria. Note that the coordinator AP may not operate as an AP that transmits a beacon frame and may execute only the role of a coordinator AP which includes sending instructions to each AP and the like. Also, each AP may include a plurality of the wireless LAN communication control units 515 and operate as a plurality of coordinated APs. Also, the coordinator AP may be implemented as a physical function, and a single physical AP may operate as one or more coordinated APs while also operating as the coordinator AP.

There is a demand for an improvement to the throughput of wireless communication using a communication apparatus that executes communication via wireless LAN. When multi-AP communication (Coordinated-OFDMA method) is performed with a plurality of APs using wireless LAN communication, the communication throughput can be improved compared to when communication is performed using a single AP. Also, when multi-AP communication (Joint-Transmission method) is performed, communication reliability can be improved compared to when communication is performed using a single AP.

However, with the communication apparatus, there may be cases of displaying a user interface (UI) for performing settings for establishing a wireless LAN connection premised on connection/communication with a single AP and cases of executing connection processing with an AP. In such cases, while the communication apparatus is connected to an AP, if the user performs a connection operation with another AP and disconnects the wireless communication with the currently connected AP, multi-AP communication may be unable to be established due to connection processing with the other AP being executed as instructed by the user. According to the present embodiment, multi-AP communication can be performed better. This configuration will be described below.

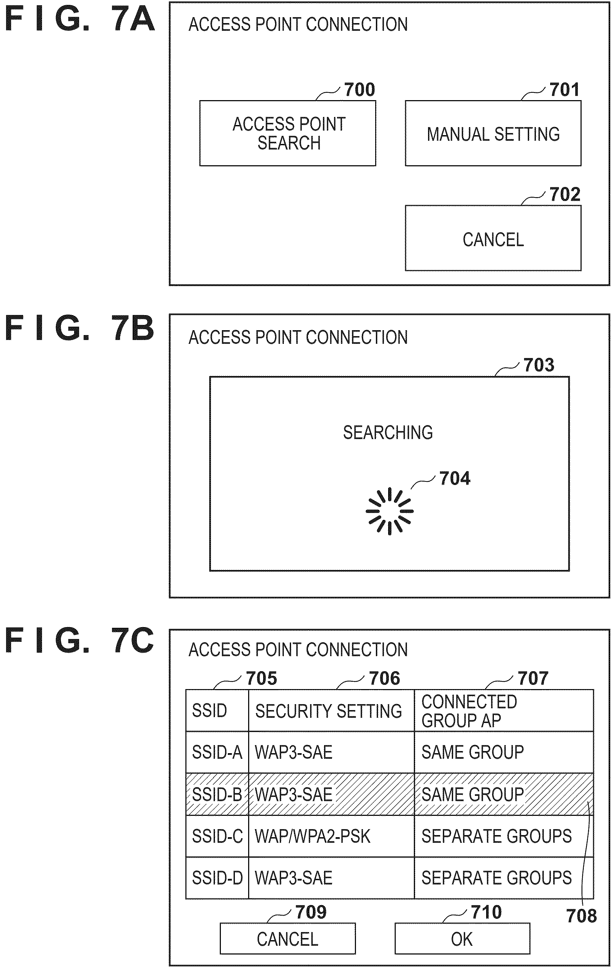

FIGS. 7A to 7I schematically illustrate examples of wireless infrastructure connection settings screen displays on a display (touch panel display) included in the operation display unit 220 of the MFP 100.

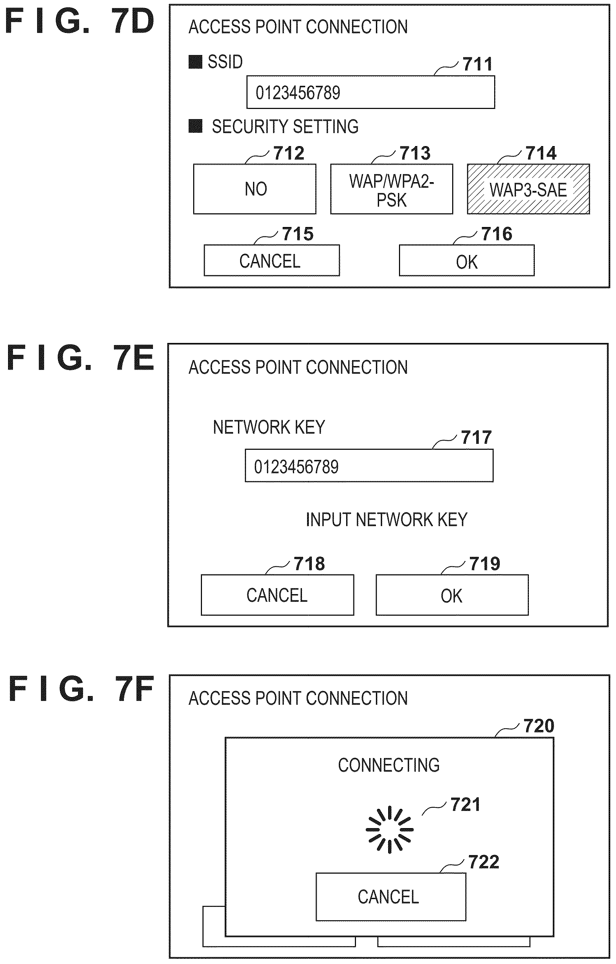

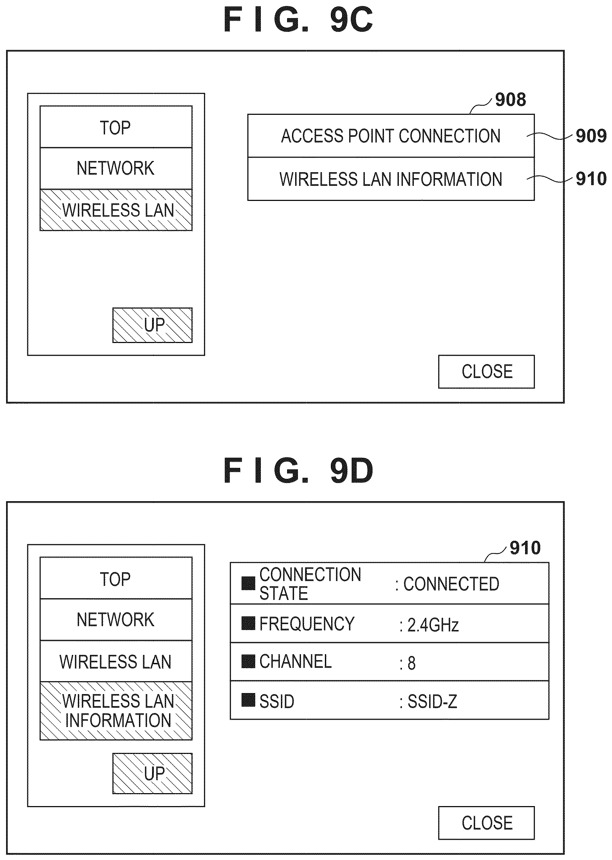

FIG. 7A is a display example of a screen displayed in a case where Access point connection 909 of FIG. 9C described below is selected. When an "Access point search" button 700 is pressed, the MFP 100 starts a search for access points that exist in the surroundings and displays the screen of FIG. 7B on the operation display unit 220 indicating that an access point search is in progress. When a "Manual setting" button 701 is pressed, the MFP 100 displays the screen of FIG. 7D on the operation display unit 220. When a "Cancel" button 702 is pressed, the MFP 100 displays the screen of FIG. 9C on the operation display unit 220.

FIG. 7B is a display example of a screen displayed while the MFP 100 is searching for access points that exist in the surroundings. While the access point search is in progress, a search-in-progress notification 703 and a search processing in progress icon 704 indicating that a search is in progress are displayed, and when the access point search processing ends, the display switches to the screen of FIG. 7C.

FIG. 7C is a display example of a screen displayed after the access point search processing ends. A list of the search results is displayed including an Service Set Identifier (SSID) 705 relating to the access point detected in the access point search processing, a security setting 706, and group information 707 indicating in an identifiable manner whether or not the AP is in the same multi-AP group as the currently connected AP. In a state an access point is not selected in the search result list, an "OK" button 710 is grayed out, putting it in a state in which a user selection cannot be received. When a specific access point is selected from the search result list by a user operation, the background of the selected access point information is colored (selected access point 708), and the "OK" button 710 is enabled so that a user selection can be received. When a "Cancel" button 709 is pressed, the MFP 100 displays the screen of FIG. 9C on the operation display unit 220. When the "OK" button 710 is pressed, the MFP 100 displays the screen of FIG. 7E on the operation display unit 220. Note that the information relating to the access points displayed in the search result list is not limited to the information given as an example above. For example, frequency band information and channel information of those used in the wireless communication and the like may be displayed.

FIG. 7D is a display example of a screen displayed for the user to input wireless communication identification information/security setting information required for access point connection. An SSID input field 711 receives input of SSID information of an access point to connect to by the user operating the operation display unit 220. In the security setting field, a "None" button 712, a button 713, and a button 714 are displayed, and the user selects the security setting for the access point to connect to. The button 713 is a button for setting the Wi-Fi Protected Access/Wi-Fi Protected Access2 Pre-Shared Key (WAP/WPA2-PSK). The button 714 is a button for setting the Wi-Fi Protected Access3 Simultaneous Authentication of Equals (WAP3-SAE). In a state where the SSID information for the SSID input field 711 has not been input or the security setting button of the security setting field has not been selected, an "OK" button 716 is in a grayed out state and cannot receive a user selection. When SSID information is input into the SSID input field 711 and the security setting field is selected, the "OK" button 716 is enabled so that it can receive a user selection. When a "Cancel" button 715 is pressed, the MFP 100 displays the screen of FIG. 9C on the operation display unit 220. When the "OK" button 716 is pressed, the MFP 100 displays the screen of FIG. 7E on the operation display unit 220. Note that the types of security setting displayed in the security setting field are not limited to the "None", "WAP/WPA2-PSK", and "WAP3-SAE" given as examples above. For example, in the case of a communication device that supports IEEE 802.1x authentication, a "Wi-Fi Protected Access/Wi-Fi Protected Access2 Extended Authentication Protocol (WPA/WPA2-EAP)" button and the like may be displayed.

FIG. 7E is a display example of a screen displayed for the user to input network key information required for access point connection. A network key input field 717 receives input of network key information of an access point to connect to by the user operating the operation display unit 220. In a state where the network key information for the network key input field 717 has not been input, an "OK" button 719 is in a grayed out state and cannot receive a user selection. When the network key information is input into the network key input field 717, the "OK" button 719 is enabled so that it can receive a user selection. When a "Cancel" button 718 is pressed, the MFP 100 displays the screen of FIG. 7C or 7D on the operation display unit 220. When the "OK" button 719 is pressed, the MFP 100 starts the connection processing for the access point and displays the screen of FIG. 7F on the operation display unit 220.

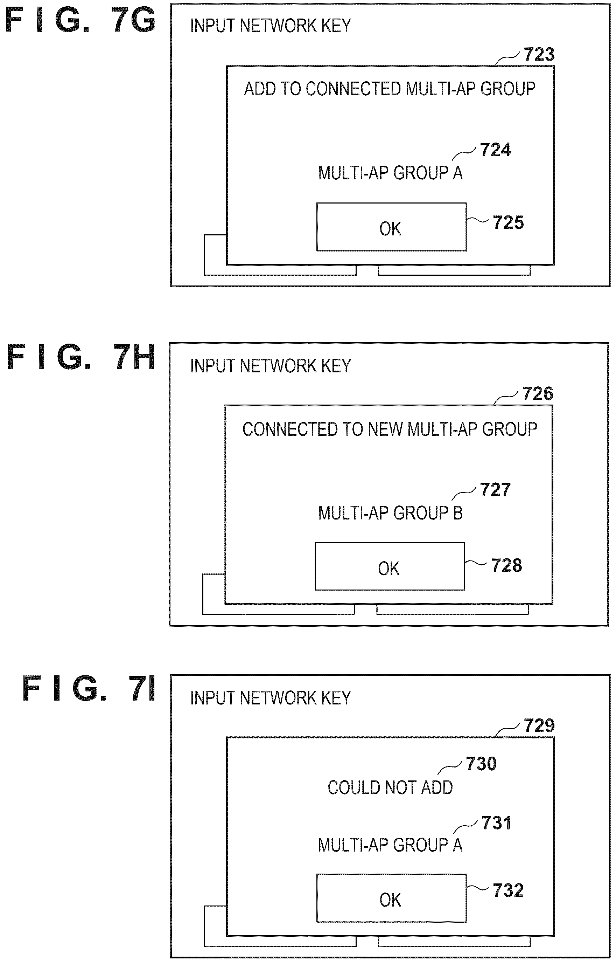

FIG. 7F is a display example of a screen displayed while the MFP 100 is executing the access point connection processing. While the access point connection processing is in progress, a connection-in-progress notification 720 and a connection processing in progress icon 721 indicating that the connection processing is in progress are displayed, and when the access point connection processing ends, the display switches to the screen of FIG. 7G, 7H, or 7I. When a "Cancel" button 722 is pressed before the access point connection processing ends, the MFP 100 suspends the connection processing for the access point and displays the screen of FIG. 9C on the operation display unit 220.

FIGS. 7G and 7H are displays examples of screens displayed when connection to an access point is successful.

An add AP to multi-AP group notification 723 of FIG. 7G is displayed in a case where connection processing for an AP that is in the same multi-AP group as the currently connected AP is successful. In other words, this screen indicates that the access point connected to via the connection processing indicated on the screen of FIG. 7F has been added to the group including the access point the MFP 100 is currently connected to. At this time, multi-AP group information 724 that can identify the multi-AP group may be displayed. When an "OK" button 725 is pressed, the MFP 100 displays the screen of FIG. 9C on the operation display unit 220.

An AP connection to multi-AP group notification 726 of FIG. 7H is displayed in a case where the AP connection is for the first AP or where connection processing for an AP of a multi-AP group that is different from the currently connected AP is successful. In other words, this screen indicates that the MFP 100 has connected to a new multi-AP group via the connection processing indicated on the screen of FIG. 7F. At this time, multi-AP group information 727 that can identify the multi-AP group may be displayed. When an "OK" button 728 is pressed, the MFP 100 displays the screen of FIG. 9C on the operation display unit 220.

FIG. 7I is a display example of a screen displayed in a case where the access point search fails or connection to an access point fails. In an AP connection failure notification 729, failure content 730 is displayed, indicating that AP addition to the same multi-AP group that the currently connected AP is in has failed or that AP connection has failed. FIG. 7I illustrates an example of a screen indicating that AP addition to the group including the access point that the MFP 100 is currently connected to has failed. At this time, multi-AP group information 731 that can identify the multi-AP group may be displayed. Note that if the cause of failure has been identified, the cause of failure may also be displayed. For example, in the case of attempting to add a new AP to the group including the access point that the MFP 100 is currently connected to and that has also reached the maximum number of AP connections, this cause of AP addition failure is displayed. When an "OK" button 732 is pressed, the MFP 100 displays the screen of FIG. 9C on the operation display unit 220.

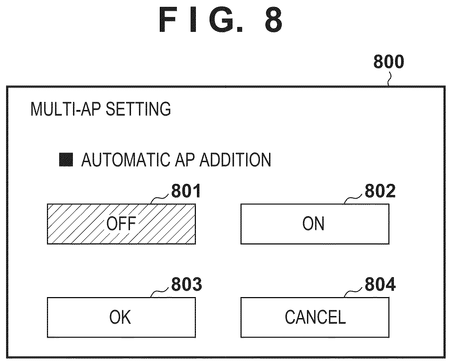

FIG. 8 schematically illustrates an example of a display of a multi-AP settings screen on a display (touch panel display) included in the operation display unit 220 of the MFP 100. The screen of FIG. 8 may be able to be displayed from the screen of FIG. 7D, for example. On a multi-AP settings screen 800, an "OFF" button 801 and an "ON" button 802 are displayed, and one of these is always selected according to a setting value stored in the non-volatile memory 215. In a case where the "ON" button 802 is selected, if the MFP 100 detects an AP of a multi-AP group that is the same as the currently connected AP, addition (connection processing for the detected AP) to the group including the access point that the MFP 100 is currently connected to is executed. Such processing is executed without an access point connection operation by a user. In a case where the selection of the "OFF" button 801 and the "ON" button 802 is changed and an "OK" button 803 is pressed via a user operation, the setting value stored in the non-volatile memory 215 is updated with the post-change value. In a case where the selection of the "OFF" button 801 and the "ON" button 802 is not changed and an "OK" button 803 is pressed, the setting value stored in the non-volatile memory 215 is not updated. Also, in a case where the selection of the "OFF" button 801 and the "ON" button 802 is changed and a "Cancel" button 804 is pressed, the setting value stored in the non-volatile memory 215 is not updated.

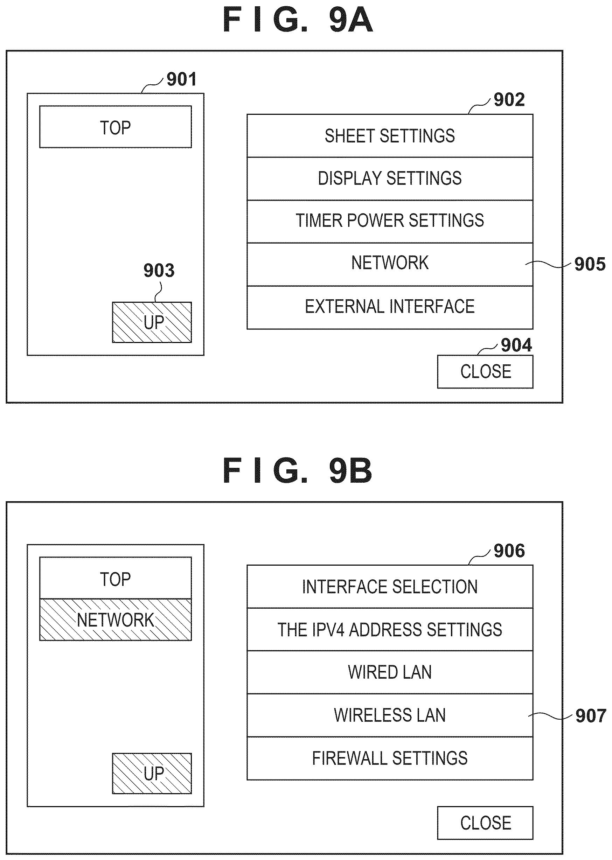

FIGS. 9A to 9D schematically illustrate examples of a screen display relating to MFP 100 settings on a display (touch panel display) included in the operation display unit 220 of the MFP 100.

FIG. 9A corresponds to a screen relating to the settings menu of the MFP 100. The settings menu is managed in a hierarchical structure, and the currently displayed hierarchical position is displayed in a settings tree 901, and the display is updated each time a settings item is selected from a currently displayed settings item list 902. In the currently displayed settings item list 902, a list of the settings items in the current hierarchy is displayed, and in a case where a settings item is selected from the currently displayed settings item list 902 via a user operation, the display of the currently displayed settings item list 902 is also updated. An "Up" button 903 is used when changing the hierarchy of the displayed settings menu. The hierarchy moves up one each time the "Up" button 903 is pressed, and the displayed content of the settings tree 901 and the currently displayed settings item list 902 are also updated. In a case where the currently displayed hierarchical position is the highest level, the "Up" button 903 is in a grayed out state and cannot receive a user selection. When a "Close" button 904 is pressed, a screen relating to the settings menu of the MFP 100 is hidden (closed).

FIG. 9B is an example of a screen display displayed in a case where the Network menu item 905 is selected from the currently displayed settings item list 902. In a currently displayed settings item list 906, settings relating to the communication network, for example, the selection of a communication interface to use in communication, the IP address settings, the firewall settings, and other similar settings items are displayed. Note that the settings items described above are examples, the settings items in accordance with the function of the MFP 100 or the like may be displayed.

FIG. 9C is an example of a screen display displayed in a case where Wireless LAN menu item 907 is selected from the currently displayed settings item list 906. In a currently displayed settings item list 908, an access point connection item 909 and a wireless LAN information item 910 are displayed. When the access point connection item 909 is selected, the screen of FIG. 7A described above is displayed. When the wireless LAN information item 910 is selected, wireless LAN communication detailed information 910 of FIG. 9D is displayed, and the wireless LAN connection status, the frequency band and channel used in communication, the SSID information, and the like are displayed. Note that these settings items are examples, and the settings items are not limited to those described above. For example, the received signal strength indicator of the wireless LAN may be displayed.

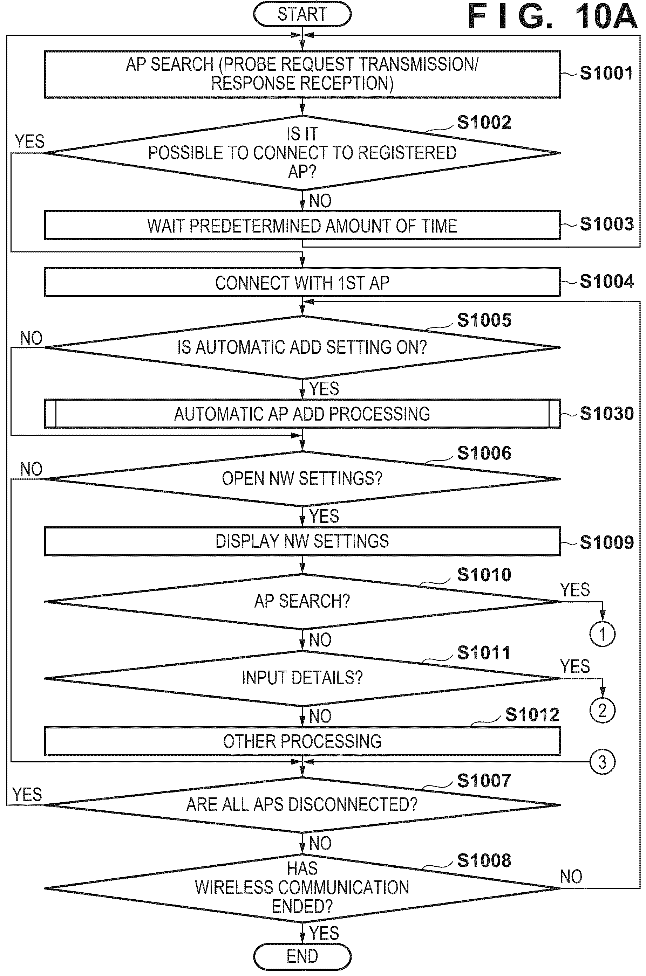

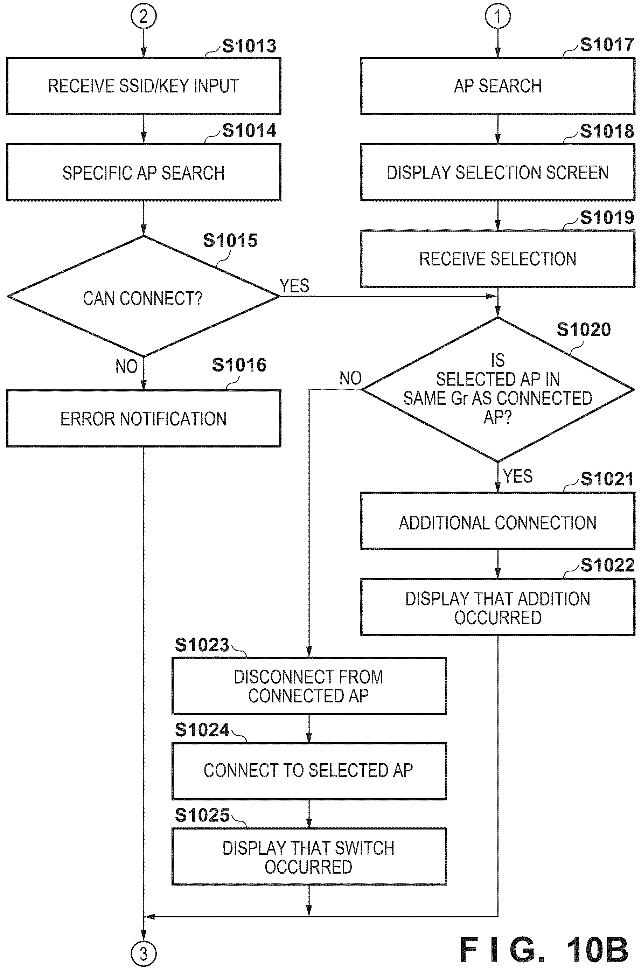

FIGS. 10A and 10B are flowcharts illustrating the processing to add an access point to the group including the access point that the MFP 100 is currently connected to. The processing in FIGS. 10A and 10B is implemented by the CPU 212 reading out a program stored in the ROM 213 onto the RAM 214 and executing the program, for example. The processing of FIGS. 10A and 10B is executed when the MFP 100 is started up, for example.

In S1001, the CPU 212 searches for an access point in the surroundings of the MFP 100 by executing probe request transmission processing/probe response reception processing.

In S1002, the CPU 212 determines whether or not a found access point is an access point that matches access point information of a wireless profile stored in the non-volatile memory 215. The access point information include connection information for connecting to the access point. In other words, in S1002, whether or not the found access point is an access point registered in the MFP 100 and whether or not it is in a state in which it is able to connect to an access point registered in the MFP 100 is determined.

In a case where it is determined that the access point matches access point information stored in the non-volatile memory 215, in S1004, the CPU 212 connects to the access point using the access point information stored in the non-volatile memory 215. In a case where it is determined that the access point does not match the access point information stored in the non-volatile memory 215, in S1003, the CPU 212 waits for a predetermined amount of time to elapse. When the predetermined amount of time elapses, the processing from S1001 is repeated. Note that it being determined that the access point does not match access point information stored in the non-volatile memory 215 corresponds to a case where an access point matching access point information stored in the non-volatile memory 215 is not able to be found. Also, in a case where connection to an access point that matches access point information stored in the non-volatile memory 215 fails in S1004, the processing of S1003 is executed.

In S1005, the CPU 212 references the setting value of the automatic add function for APs stored in the non-volatile memory 215 set on the multi-AP settings screen 800 of FIG. 8. Then, on the basis of the setting value, the CPU 212 determines whether the automatic add function for APs is set to enabled or disabled. In a case where the "ON" button 802 of the multi-AP settings screen 800 is selected, the automatic add function for APs is determined to be set to enabled. In a case where the "OFF" button 801 is selected, the automatic add function for APs is determined to be set to disabled.

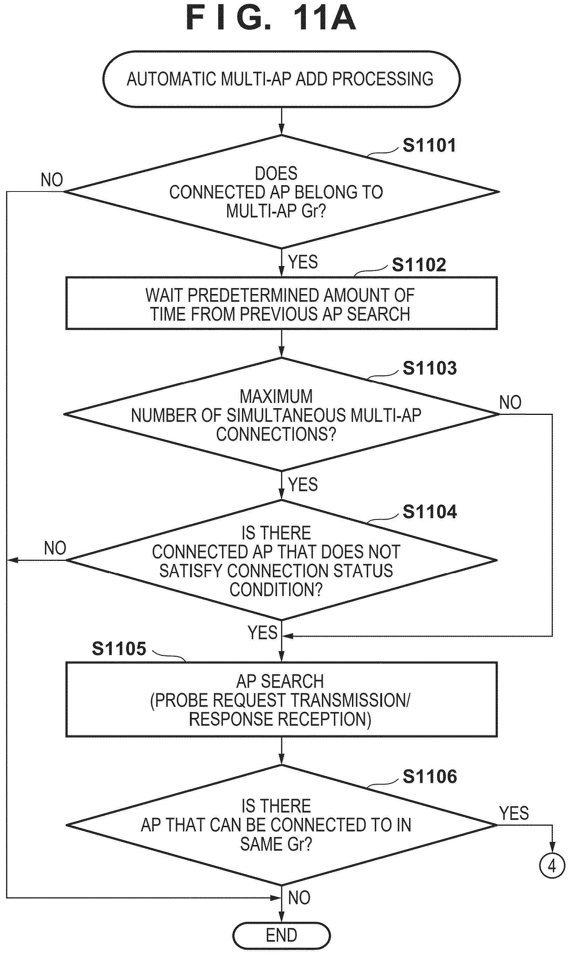

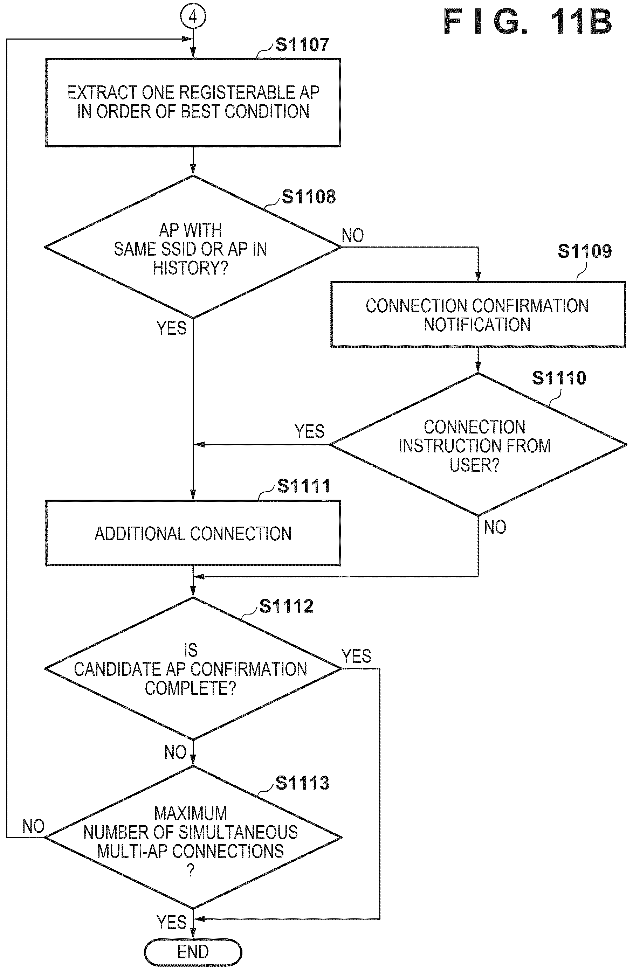

In a case where it is determined that the automatic add function for APs is set to enabled, in S1030, the CPU 212 executes automatic AP add processing. The automatic AP add processing will be described below using FIGS. 11A and 11B. After it is determined that the automatic add function for APs is set to disabled or after S1030, in S1006, the CPU 212 determines whether or not the wireless LAN menu item 907 is selected. In other words, whether or not an instruction to display a settings screen relating to the wireless LAN has been received is determined. In a case where it is determined that the wireless LAN menu item 907 is not selected, the processing advances to S1007. In a case where it is determined that the wireless LAN menu item 907 is selected, the processing advances to S1009.

In S1007, the CPU 212 determines whether or not connection with all access points included in the group including the access point that the MFP 100 is currently connected to has been disconnected. In a case where it is determined that connection with all of the access points has been disconnected, the processing from S1001 is repeated. In a case where it is determined that connection with all of the access points has not been disconnected, the processing advances to S1008.

In S1008, the CPU 212 determines whether or not wireless communication has ended. In a case where it is determined that wireless communication has not ended, that is, that the wireless unit 250 is still operating, the processing from S1005 is repeated. In a case where it is determined that wireless communication has ended, the processing of FIGS. 10A and 10B ends. A case where it is determined that wireless communication has ended corresponds to a case where the power of the MFP 100 has been turned off.

In S1009, the CPU 212 displays the screen of FIG. 9C. Note that the following processing includes a case where the access point connection item 909 is selected on the screen of FIG. 9C and a case where the wireless LAN information item 910 is selected.

In S1010, the CPU 212 determines whether or not the "Access point search" button 700 has been selected. In a case where it is determined that the "Access point search" button 700 has not been selected, in S1011, the CPU 212 determines whether or not the "Manual setting" button 701 has been selected. In a case where it is determined that the "Manual setting" button 701 has not been selected, in S1012, the CPU 212 displays the screen of FIG. 9D.

In a case where it is determined that the "Manual setting" button 701 has been selected, in S1013, the CPU 212 displays the screen of FIG. 7D and FIG. 7E according to the user operation and receives an input of the access point connection information (SSID/network key) from the user. When the "OK" button 719 is pressed on the screen of FIG. 7E, the processing advances to S1014.

In S1014, the CPU 212 searches for an access point using the access point connection information (SSID/network key) input by the user in S1013.

In S1015, the CPU 212 determines whether or not an access point of the access point connection information input by the user has been detected. In other words, it is determined whether or not connection to a user-designated access point can be performed.

In a case where it is determined that an access point of the access point connection information input by the user has not been detected, in S1016, the CPU 212 displays the screen of FIG. 7I and notifies the user that the user-designated access point could not be detected. In a case where it is determined that an access point of the access point connection information input by the user has been detected, the processing advances to S1020.

In a case where it is determined that the "Access point search" button 700 has been selected in S1010, in S1017, the CPU 212 displays the screen of FIG. 7B and executes probe request transmission processing/probe response reception processing to search for an access point in the surroundings of the MFP 100. When the access point search processing ends, in S1018, the CPU 212 displays the screen of FIG. 7C and displays a list of the access point search results. Note that in a case where the maximum number of access points that the MFP 100 can simultaneously connected to has already been reached, display control may be performed to hide or gray out an access point that is in the same multi-AP group as the currently connected access point and to make an additional AP connection unable to be performed. The maximum number of access points that the MFP 100 can simultaneously connect to may be a number set according to the capability of the MFP 100 or may be a number set for each multi-AP group.

In S1019, the CPU 212 displays the screen of FIG. 7C and FIG. 7E according to the user operation and receives a connection instruction for the access point selected from the access point search result list.

In S1020, the CPU 212 determines whether or not the access point designated by a user operation in S1013 or selected via a user operation in S1019 is an access point that is in the same multi-AP group as the currently connected access point. At this time, whether the access point designated or selected via a user operation is in the same multi-AP group as the currently connected access point may be displayed. In a case where it is determined that the access point is an access point in the same multi-AP group, in S1021, the CPU 212 displays the screen of FIG. 7F and executes the processing of the MFP 100 in the processing sequence of FIG. 6 to perform an additional connection (establish multi-AP communication) to the access point designated via a user operation in S1013 or selected via a user operation in S1019. Specifically, for example, the processing of S606 of the MFP 100 is executed. After the access point additional connection is complete, in S1022, the CPU 212 displays the screen of FIG. 7G and notifies the user that access point additional connection has been performed (that the access point has been added to the group including the access point that the MFP 100 is currently connected to). Note that an additional connection notification as well as a notification of the number of currently connected access points and the maximum number of access points that can be simultaneously connected to may be performed. Note that even in a case where it is determined that the access point is in the same multi-AP group in S1020, if the maximum number of access points that the MFP 100 can simultaneously connect to has already been reached, control may be performed so that the processing of S1021 is not executed, and the screen of FIG. 7I may be displayed.

In a case where it is determined that the access point is not in the same multi-AP group in S1020, in S1023, the CPU 212 displays the screen of FIG. 7F and disconnects the wireless connection with the access point already connected to in S1004 and S1021.

In S1024, the CPU 212 connects to the access point designated via a user operation in S1013 or selected via a user operation in S1019. In other words, instead of the access point already connected to, connection is performed with the access point designated via a user operation in S1013 or selected via a user operation in S1019.

In S1025, the CPU 212 displays the screen of FIG. 7H and notifies the user of the connection to an access point of a new multi-AP group.

In this manner, in the present embodiment, in a case where the "Access point search" button 700 or the "Manual setting" button 701 and an access point to connect to is designated or selected (specified) by the user, the processing of S1010 to S1025 is executed. In other words, in a case where a designated or selected access point is in the same multi-AP group as the currently connected access point, connection control is performed to maintain the connection with the currently connected access point and add the access point as an access point for the MFP 100 to connect to. This can prevent the connection with the currently connected access point being disconnected without user intent, resulting in multi-AP communication being unable to be established.

FIGS. 11A and 11B is a flowchart illustrating the automatic AP add processing of S1030.

In S1101, the CPU 212 determines whether or not the currently connected access point is an access point belonging to a multi-AP group. In a case where it is determined that the currently connected access point is not an access point belonging to a multi-AP group, the processing of FIGS. 11A and 11B ends, and the processing advances to S1006 of FIG. 10A. In a case where it is determined that the currently connected access point is an access point belonging to a multi-AP group, in S1102, the CPU 212 waits for a predetermined amount of time to elapse from the previous access point search processing. Note that the predetermined amount of time may be settable via a user operation using the operation display unit 220 or the like. When the predetermined amount of time from the previous access point search processing elapses, in S1103, the CPU 212 determines whether or not the number of access points that the MFP 100 is currently connected to has reached the maximum number of access points that the MFP 100 can simultaneously connect to.

In a case where it is determined that the number of currently connected access points has reached the maximum number of access points, in S1104, the CPU 212 monitors the connection status with the currently connected access point and determines whether or not an access point that does not satisfy a connection condition exists. The connection condition, for example, is the received signal strength indicator, an access point security setting, or the like. Note that in a determination based on the connection condition, an element relating to wireless communication such as channel and frequency band may be used, and the connection condition may be changeable via a user operation using the operation display unit 220 or the like. In a case where it is determined that an access point that does not satisfy the connection condition exists or it is determined that the number of currently connected access points has not reached the maximum number of access points that can be simultaneously connected to, in S1105, the CPU 212 executes the probe request transmission processing/probe response reception processing to search for an access point in the surroundings of the MFP 100. In a case where it is determined that an access point that does not satisfy the connection condition does not exist, the processing of FIGS. 11A and 11B ends, and the processing advances to S1006 of FIG. 10A. Note that in a case where it is determined that the currently connected access point is an access point that belongs to a multi-AP group in S1101, the processing of S1105 may be executed without executing the processing of S1103 and S1104.

In S1106, as a result of the access point search, the CPU 212 determines whether or not an access point has been detected that is in the same multi-AP group as the currently connected access point and that can be connected to. An access point that can be connected to is an access point that satisfies the connection condition described above, for example. In a case where it is determined that an access point has not been detected that is in the same multi-AP group as the currently connected access point and that can be connected to, the processing of FIGS. 11A and 11B ends, and the processing advances to S1006 of FIG. 10A. In a case where it is determined that an access point has been detected that is in the same multi-AP group as the currently connected access point and that can be connected to, the processing advances to S1107.

In S1107, the CPU 212 selects one access point in order of best connection condition from among the access points that are in the same multi-AP group as the currently connected access point and that can be connected to. Note that this condition for selection is an example, and selection may be performed using an element relating to wireless communication such as channel and frequency band, and the selection criteria may be changeable via a user operation using the operation display unit 220 or the like.

In S1108, the CPU 212 determines whether or not the condition of "at least one of the SSID of the selected access point being the same as that of the currently connected access point and the SSID of the selected access point being that of an access point with a previous connection history" is satisfied. In a case where it is determined that the condition is satisfied, in S1111, the CPU 212 executes the processing of the MFP 100 in the processing sequence of FIG. 6 and performs an access point additional connection (establishes multi-AP communication). Specifically, for example, the processing of S606 of the MFP 100 is executed.

The SSID of the selected access point being the same as that of the currently connected access point may refer to, in other words, the access point having a high possibility of being used by the user. In a similar manner, the SSID of the selected access point being that of an access point with a previous connection history may refer to, in other words, the access point having a high possibility of being used by the user. Accordingly, the determination of S1108, in other words, may be referred to as a determination of whether the selected access point is a reliable access point with a high possibility of being used by the user.

The case of the processing of S1111 being executed includes a case where it is determined that the maximum number of access points that the MFP 100 can simultaneously connect to has been reached in S1103 and a case where it is determined that an access point that does not satisfy the connection condition exists in S1104. In such cases, in S1111, the CPU 212 may disconnect the connection with the access point that does not satisfy the connection condition and execute the processing of the MFP 100 in the processing sequence of FIG. 6 to perform an access point additional connection (establish multi-AP communication).

In a case where it is determined that the condition is not satisfied in S1108, in S1109, the CPU 212 displays a notification screen indicating that an access point has been detected and waits to receive an instruction from the user. A case where the processing of S1109 is executed corresponds to a case where the SSID of the selected access point is not the same as that of the currently connected access point and not that of an access point with a previous connection history. In such a case, access point additional connection processing is executed on the basis of the reception of an additional connection instruction from the user.

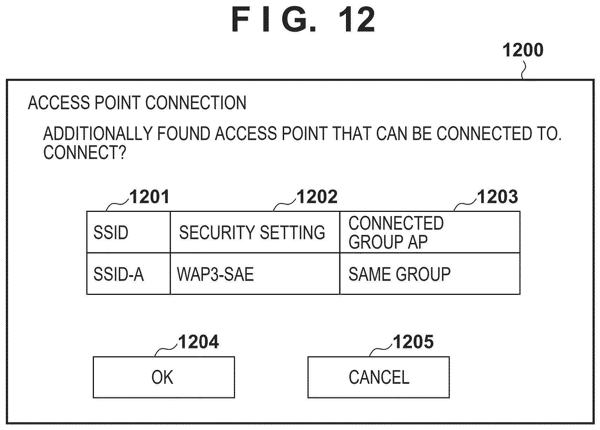

FIG. 12 schematically illustrates an example of a confirmation screen for AP additional connection displayed on a display (touch panel display) included in the operation display unit 220 of the MFP 100. An access point detection notification screen 1200 is a screen displayed when an access point that can be added to the group including the access point that the MFP 100 is currently connected to has been detected. A list of the search results including information such as SSID 1201 relating to the detected access point, a security setting 1202, and group information 1203 indicating whether the access point is in the same multi-AP group as the currently connected AP is displayed. When a "Connect" button 1204 is pressed, the CPU 212 executes the processing of the MFP 100 in the processing sequence of FIG. 6 and starts the access point additional connection processing (establishes multi-AP communication). Specifically, for example, the processing of S606 of the MFP 100 is executed. When a "Cancel" button 1205 is pressed or when a certain amount of time has elapsed since the access point detection notification screen 1200 was displayed, the access point detection notification screen 1200 is closed and the access point additional connection processing is not executed (multi-AP communication is not established). Note that the information relating to the access points displayed in the search result list is not limited to the SSID, security setting, and group information given as examples above. For example, frequency band information and channel information of those used in the wireless communication and the like may be displayed.

In S1110, the CPU 212 determines the user operation content in the notification screen. In a case where it is determined that the "Connect" button 1204 has been pressed, the processing advances to S1111. In a case where it is determined that the "Cancel" button 1205 has been pressed or that a certain amount of time without a user operation of the notification screen has elapsed, the processing advances to S1112.

In S1112, the CPU 212 determines whether or not the processing of S1107 has been executed for all of the access points that are in the same multi-AP group as the currently connected access point and that can be connected to. In a case where it is determined that the processing of S1107 has been executed for all of the access points that are in the same multi-AP group as the currently connected access point and that can be connected to, the processing of FIGS. 11A and 11B ends, and the processing advances to S1006 of FIG. 10A. In S1113, the CPU 212 determines whether or not the number of access point connections has reached the maximum number of access points that the MFP 100 can simultaneously connect to. In a case where it is determined that the maximum number of access points that can be simultaneously connected to has not been reached, the CPU 212 selects one of the access points with the next best connection condition and repeats the processing from S1107. In a case where it is determined that the maximum number of access points that can be simultaneously connected to has been reached, the processing of FIGS. 11A and 11B ends, and the processing advances to S1006 of FIG. 10A.

In this manner, in the present embodiment, even after the MFP 100 is started up and a connection to a registered access point has been made, access points can further be searched for. Then, as the result of the search, if a detected access point satisfies the condition, the access point can be added to the group including the access point that the MFP 100 is currently connected to without a user operation.

As described above, according to the present embodiment, an access point can be added (multi-AP communication can be established) to the group including the access point that the MFP 100 is currently connected to, and thus a communication environment that is better for multi-AP communication can be provided.

Note that the various types of control described above performed by the CPU of each apparatus may be performed by a single piece of hardware or the processing may be shared by a plurality of pieces of hardware (for example, a plurality of processors and circuits) to perform control of the entire apparatus.

Also, in the embodiment described above, an example of the present disclosure applied to an MFP has been described. However, no such limitation is intended, and any wireless device that can perform multi-AP communication may be used. In other words, the present disclosure is applicable to a personal computer, a PDA, a tablet terminal, a smartphone or similar mobile phone terminal, a music player, a game console, an electronic book reader, a smartwatch, and various types of measurement apparatuses (sensor apparatuses) such as a thermometer and a hygrometer. Also, the present disclosure is applicable to a digital camera (including a still camera, a video camera, a network camera, and a security camera), a printer, a scanner, and a drone. Also, the present disclosure is applicable to an image output apparatus, an audio output apparatus (for example, a smart speaker), a media streaming player, and a wireless LAN client (adapter) that can connect to a USB terminal or a LAN cable terminal. An image output apparatus includes an apparatus such as a set top box, for example, that obtains (downloads) moving image and still images from the Internet specified by a URL in an instruction from a communication apparatus and outputs these to a display device connected via a HDMI (registered trademark) image output terminal or the like. In this manner, streaming playback is achieved on a display device, and mirroring display (displaying content displayed on a communication apparatus also on a display device) is achieved. Also, the image output apparatus includes a television, hard disk recorder, Blu-ray recorder, DVD recorder, or similar media player; a head-mounted display, a projector, a television, a display apparatus (monitor), and a signage apparatus. Also, the present disclosure is applicable to a device that can connect via Wi-Fi to an air conditioner, a refrigerator, a washing machine, a vacuum cleaner, an oven, a microwave, a lighting fixture, a heating device, a cooling device, or any so-called smart home appliances.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus comprising:
receiving means configured to receive, while the communication apparatus is connected to a first access point, a user operation designating a second access point different from the first access point as a target for connection with the communication apparatus;
connection control means configured to perform control to maintain a connection between the communication apparatus and the first access point and connect the communication apparatus to the second access point designated by the user operation designating the second access point received by the receiving means; and
communication control means configured to perform control to perform data communication via both the first access point and the second access point in a state in which both the first access point and the second access point are connected to.

2. The communication apparatus according to claim 1, wherein
the second access point is an access point that belongs to a group including the first access point in multi-AP communication compliant with IEEE 802.11 series standards.

3. The communication apparatus according to claim 1 or 2, further comprising
determination means configured to determine whether or not the second access point is an access point that belongs to a group including the first access point in multi-AP communication compliant with IEEE 802.11 series standards.

4. The communication apparatus according to claim 3, wherein
in a case where the determination means determines that the second access point is an access point without a history of previous connection to the communication apparatus and furthermore belongs to the group including the first access point in multi-AP communication compliant with IEEE 802.11 series standards, the connection control means performs control to maintain the connection between the communication apparatus and the first access point and connect the communication apparatus to the second access point.

5. The communication apparatus according to claim 3 or 4, wherein
in a case where the determination means determines that the second access point is not an access point that belongs to the group including the first access point in multi-AP communication compliant with IEEE 802.11 series standards, the connection control means performs control to disconnect the connection between the communication apparatus and the first access point and connect the communication apparatus to the second access point.

6. The communication apparatus according to any one of claims 3 to 5, wherein
in a case where the receiving means receives a user operation designating a third access point different from the first access point and different from the second access point after the connection control means has connected the communication apparatus to the second access point, the determination means determines whether or not the third access point is an access point that belongs to a group including the first access point and the second access point in multi-AP communication compliant with IEEE 802.11 series standards.

7. The communication apparatus according to claim 6, wherein
in a case where the determination meansdetermines that the third access point is not an access point that belongs to the group including the first access point and the second access point in multi-AP communication compliant with IEEE 802.11 series standards, the connection control means performs control to disconnect connections between the communication apparatus and the first access point and the second access point and connect the communication apparatus to the third access point.

8. The communication apparatus according to any one of claims 1 to 7, wherein
the user operation designating the second access point is an input of connection information for the second access point.

9. The communication apparatus according to any one of claims 1 to 7, wherein
the user operation designating the second access point is a selection of the second access point in a list of access points.

10. The communication apparatus according to claim 9, further comprising
display control means configured to perform control to display the list of the access points, and
the display control means performs control to, for each access point in the list of the access points, identifiably display in the list of the access points whether the access point is in a group identical to the group including the first access point in multi-AP communication compliant with IEEE 802.11 series standards.

11. The communication apparatus according to any one of claims 1 to 10, wherein
even in a case where the second access point is an access point that belongs to a group including the first access point in multi-AP communication compliant with IEEE 802.11 series standards, if a total number of connections of the communication apparatus to an access point that belongs to the group has reached an upper limit, the connection control means performs control to not connect the communication apparatus to the second access point.

12. The communication apparatus according to any one of claims 1 to 11, wherein
the reception by the receiving means is executed in a case where an instruction for displaying a screen relating to setting of the communication apparatus is issued.

13. The communication apparatus according to claim 12, further comprising
search means configured to search for an access point external to the communication apparatus in a case where the instruction for displaying the screen relating to setting of the communication apparatus is not issued while the communication apparatus is connected to the first access point,
in a case where, as a result of the search performed by the search means, an access point is detected, the connection control means performs control to maintain the connection between the communication apparatus and the first access point and connect the communication apparatus to the detected access point, and
the communication control means performs control to perform data communication via both the first access point and the detected access point in a state in which both the first access point and the detected access point are connected.

14. The communication apparatus according to claim 13, wherein
control is performed so that the search performed by the search means while the communication apparatus is connected to the first access point is executed in a case where the first access point is an access point that belongs to a group in multi-AP communication compliant with IEEE 802.11 series standards, and is not executed in a case where the first access point is not an access point that belongs to a group in multi-AP communication compliant with IEEE 802.11 series standards.

15. The communication apparatus according to claim 13 or 14, wherein
an access point that is the detected access point and is a target for control by the connection control means is an access point that belongs to a group including the first access point in multi-AP communication compliant with IEEE 802.11 series standards.

16. The communication apparatus according to any one of claims 13 to 15, wherein
in a case where a plurality of access points are detected, the connection control means performs control to connect the communication apparatus to one or more of the plurality of detected access points in descending order of better connection status including a received signal strength indicator.

17. The communication apparatus according to claim 16, wherein
a second condition includes at least one of having a Service Set Identifier (SSID) identical to that of the first access point and being an access point that the communication apparatus has previously connected to, and
the connection control means performs control to, in a case where an access point corresponding to a target for control by the connection control means satisfies the second condition, connect the communication apparatus to the access point without relying on an operation performed by a user, and in a case where the access point corresponding to a target for control by the connection control means does not satisfy the second condition, connect the communication apparatus to the access point in response to receiving an instruction from the user.

18. The communication apparatus according to any one of claims 1 to 17, wherein
the data communication is communication performed using a Coordinated-Orthogonal Frequency Division Multiple Access (Co-OFDMA) method compliant with IEEE 802.11 series standards.

19. The communication apparatus according to any one of claims 1 to 17, wherein
the data communication is communication performed using a Joint-Transmission (Joint-TX) method compliant with IEEE 802.11 series standards.

20. A method executed in a communication apparatus comprising:
receiving, while the communication apparatus is connected to a first access point, a user operation designating a second access point different from the first access point as a target for connection with the communication apparatus;
performing control to maintain a connection between the communication apparatus and the first access point and connect the communication apparatus to the second access point designated by the user operation designating the received second access point; and
performing control to perform data communication via both the first access point and the second access point in a state in which both the first access point and the second access point are connected to.

21. A program configured to cause a computer of a communication apparatus to function to:
receive, while the communication apparatus is connected to a first access point, a user operation designating a second access point different from the first access point as a target for connection with the communication apparatus;
perform control to maintain a connection between the communication apparatus and the first access point and connect the communication apparatus to the second access point designated by the user operation designating the received second access point; and
perform control to perform data communication via both the first access point and the second access point in a state in which both the first access point and the second access point are connected to.

22. A non-transitory computer-readable storage medium storing a program configured to cause a computer of a communication apparatus to function to:
receive, while the communication apparatus is connected to a first access point, a user operation designating a second access point different from the first access point as a target for connection with the communication apparatus;
perform control to maintain a connection between the communication apparatus and the first access point and connect the communication apparatus to the second access point designated by the user operation designating the received second access point; and
perform control to perform data communication via both the first access point and the second access point in a state in which both the first access point and the second access point are connected to.
